# EUROPEAN PATENT SPECIFICATION

(11) **EP 1 366 670 B1**
(45) Date of publication and mention of the grant of the patent: **03.08.2005**
(21) Application number: 03076353.6
(22) Date of filing: 07.05.2003
(51) Int. Cl.: A23C 9/152, A23C 9/154

(54) **Gas-containing dessert product and method for preparation thereof**
Gasenthaltendes Dessert und Verfahren zu seiner Herstellung
Dessert contenant du gaz et son procédé de préparation

(30) Priority: 31.05.2002 NL 1020731
(43) Date of publication of application: 03.12.2003
(73) Proprietor: Campina B.V., 5301 LB Zaltbommel (NL)
(72) Inventor: Musters-van Beusekom, Julia Theresa, 1273 KR Huizen (NL); Schlatmann, Jurriaan Ernst, 3572 GX Utrecht (NL)
(74) Representative: Barendregt, Frank, Drs.

(56) References cited:
- EP-A- 0 747 301
- EP-A- 1 226 761
- DE-A- 2 811 356
- DE-A- 3 502 967
- US-A- 4 818 554
- US-B1- 6 368 652

## Description

The application relates first and foremost to a gas-containing dessert product which comprises a mixture of a dairy product and a whipped foamable product.

Such a gas-containing dessert product is known from GB-B 1 422 792.

Said publication describes the creation of a foamed dessert product in which quarg is mixed with a foamed stabilized sugar-containing composition and, if necessary, fruit is also added. The initial dairy product is in this case quarg; other possibilities mentioned are cottage cheese and yoghurt, i.e. acid products.

It is stated that a quantity of whipping cream can if necessary be added to the initial dairy product; in this product the whipping cream is therefore not present in the whipped part of the gas-containing dessert product.

It is the object of the invention to provide a gas-containing dessert product of the stated type in which a creamy mouthfeel is associated with the whipped part of the gas-containing dessert product. Furthermore, a dessert product is desired in which gas bubbles that are visible to the naked eye are largely absent (in technical terms a "blind" product). To this end the gas-containing dessert product referred to in the opening sentence is characterized as given in claim 1.

The term "dairy product" in the present invention means a product which comprises at least milk and a binding agent; this part of the dessert product constitutes an unwhipped part thereof and can for example also contain sugar, flavour, colorant and other usual additives as well as milk and binding agents.

The dessert product can if desired also contain one or more other unwhipped parts which may if necessary be present as a separate phase from the aforesaid mixture. Such a separate phase can for example include fruit constituents. The separate phase is usually mixed with the remainder by the consumer at the time of consumption.

It has been found that, when the combination of a dairy product with a neutral pH and a whipped foamable product which contains an edible fat is used, a very stable gas-containing dessert product is obtained which combines a neutral, i.e. non-acid taste with a creamy mouthfeel in the absence of gas bubbles that are visible to the naked eye.

A substantially neutral pH means a pH which lies in the range from 6.0 to 7.5 and in particular 6.5 to 7.0.

The term "whipped foamable product which contains an edible fat" generally means an oil-in-water emulsion which has been made into a foam by whipping. More specifically, the oil-in-water emulsion as applied here comprises an emulsion in which as a minimum an edible fat (or mixture thereof), water, an emulsifier (or emulsifier mixture) and possibly other constituents such as stabilizers, protein, sugar, flavour and the like are present.

The edible fat can be chosen from vegetable, animal and milk fats; the fat is expediently a vegetable fat.

In an advantageous embodiment the whipped foamable product which comprises an edible fat is a whipped cream substitute product.

Whipped cream substitute products are known and are also known as "topping" or "cuisine whipping".

The edible fat in the whipped cream substitute product can also be chosen from vegetable, animal and milk fats; the edible fat is expediently a vegetable fat. In addition to edible fat, a whipped cream substitute product contains at least water and an emulsifier or emulsifier mixture.

A whipped cream substitute product containing vegetable fat is for example Menkomel®, which is marketed by the Applicant; the vegetable fat comprises mainly hardened fats. Similar products which contain at least an edible fat and an emulsifier are also regarded as whipped cream substitute products.

As stated, the gas-containing dessert product according to the invention comprises gas bubbles with a maximum gas bubble diameter of 25 µm.

With regard to the gas which is contained in the gas bubbles it is pointed out that this can be air; a gas such as nitrogen can also be used, however. Nitrogen is often used to exclude risks of oxidation (air) and to slow down disproportioning (see below) of gas bubbles because of the poorer solubility of nitrogen.

As will be discussed later, the mouthfeel of such a gas-containing dessert product is connected with the gas bubble diameter in the product and it has been found that a maximum gas bubble diameter of 25 µm is to be preferred.

As said, it has been found that in the described product according to the invention the maximum gas bubble diameter is stable for at least 15 days after production thereof.

This aspect is of importance because products containing gas bubbles generally have a tendency to coalescence, in which gas bubbles merge. In addition, disproportioning or Ostwald coarsening occurs, in which big gas bubbles increase in size at the expense of small ones; the smaller the gas bubbles, the greater is this problem.

The gas-containing dessert product that is the object of the present application, in which small gas bubbles occur (i.e. < 25 µm), surprisingly does not exhibit the aforesaid disproportioning or Ostwald coarsening, or exhibits them only to an extremely small extent, for at least the first 15 days after production.

Coarsening of the gas bubbles over time is undesirable because it adversely affects the mouthfeel, as will be discussed later. If a dairy product with a substantially neutral pH and a whipped foamable product which may possibly be a whipped cream substitute product containing an edible fat are combined, said coarsening is observed to a reduced extent over time and in any case the desired maximum gas bubble diameter of 25 µm can be maintained for at least 15 days after production and in many cases even considerably longer.

In particular the dessert product is a pourable product.

Pourable is here defined as the flowing of the product out of a cup within 5 s when the cup filled with the product is tipped through 90° from an upright position.

The gas-containing dessert product according to the invention as described above is preferably a product in which the dairy product is custard, while the whipped foamable product containing an edible fat is as discussed earlier. In an advantageous embodiment the whipped foamable product is a whipped cream substitute product containing a vegetable fat; in particular the last-named product can be a topping or the aforesaid "cuisine whipping" product Menkomel® from the Applicant.

The invention also relates to a method for preparation of a gas-containing dessert product, comprising
- provision of a dairy product
- provision of a foamable product
- whipping of the foamable product to a desired overrun
- mixing of the whipped foamable product and the dairy product which is characterized in that a dairy product with a substantially neutral pH is taken as the dairy product, the foamable product contains an edible fat, the whipping of the foamable product takes place in such a way that a maximum gas bubble diameter of 25 µm is obtained with an overrun of > 200%, and the mixing of the dairy product and the whipped foamable product takes place in such quantities that an overrun of 10-150% is obtained in the gas-containing dessert product.

The overrun of the whipped foamable product is expediently > 250%, while the mixing with the dairy product takes place in such a way that the overrun of the gas-containing dessert product is > 40%.

The method can be carried out both as a batch method and continuously; the method as described above is preferably carried out in such a way that a first buffer is formed from the dairy product and a second buffer from the whipped foamable product, and that the mixing of the dairy product and the whipped foamable product takes place continuously.

The invention will now be illustrated by means of an example.

### EXAMPLE

Two products were made as follows:
I In a first trial a product was made by whipping Menkomel® for 1.5 minutes at T < 7°C with a Hobart mixer at setting 2 to an overrun of 155%; there were a large number of visible bubbles with a gas bubble size of > 25 micrometres. Mixing was carried out with standard full custard from the Applicant to an overrun of 33%: the ratio by weight of Menkomel® (155% overrun) to custard is 1:4.
II A product according to the invention was made by whipping Menkomel® with the same mixer as above for 12 minutes at T < 7°C to an overrun of 265%; mixing of the whipped foamable product with custard in the ratio by weight of 1:4 then took place; the overrun was 53%. The overrun was then reduced to 33% by carefully adding a mixture of unwhipped Menkomel® and custard in the ratio by weight of 1:4. The gas bubble size in the product is < 25 micrometres.

The abovementioned products I and II were evaluated by six people, paying attention to difference, preference and creaminess.

All the tasters found the two products different.

All the tasters preferred variant II because of the soft and creamy mouthfeel and the general absence of gas bubbles visible to the naked eye.

The only difference in products I and II is the presence of gas bubbles with a maximum diameter of 25 µm in product II and a large number of gas bubbles with a diameter > 25 µm in product I.

A product according to the invention (product II) in which the maximum gas bubble diameter is 25 µm, and which remains stable over time for at least 15 days after production, comes out best in the taste test.

With regard to the stability of the gas bubble diameter over time, see the table below, in which the measurement is made 8, 14 and 21 days after production. The product tested was a product as described according to the invention with an overrun of 60%. It can be seen that the maximum measured diameter of the gas bubbles is 20.0 µm 8 days after production, 22.7 µm 14 days after production and 24.2 µm 21 days after production. The other values measured, such as mean diameter D [1.0], number surface mean diameter D [2.0], surface area moment mean diameter D [3.2] and volume moment mean diameter D [4.3], as well as the relative standard deviation at D [1.0] and D [2.0], indicated as C₁, and the relative standard deviation at D [3.2], indicated as C₂, also remain reasonably constant over time.

The minimum diameter measured is also found to be reasonably constant over time.

**TABLE**

| **MEASUREMENT** | **1)** | **2)** | **3)** |
|---|---|---|---|
| **DAY** | **P + 8** | **P + 14** | **P + 21** |
| D1.0 (mean) | 8.5 | 9.2 | 8.2 |
| D2.0 (mean) | 9.0 | 9.7 | 8.7 |
| D3.2 (mean) | 10.6 | 11.3 | 10.9 |
| D4.3 (mean) | 11.9 | 12.6 | 12.8 |
| C₁ (deviation) | 0.35 | 0.34 | 0.41 |
| C₂ (deviation) | 0.34 | 0.34 | 0.41 |
| Number of bubbles counted | 364 | 337 | 405 |
| Min. diameter (measured) | 5.9 | 5.9 | 5.7 |
| Max. diameter (measured) | 20.0 | 22.7 | 24.2 |

For a review of the method of calculation of the above means, see Encyclopedia of emulsion technology, Marcel Dekker, New York, USA, 1983, and in particular Chapter 6.

The measurements are made as follows: A 1-ml sample of the dessert product to be tested is put into a 10-ml vessel. The sample is made up to 10 ml with glycerol (> 99.5% pure) and mixed very carefully to ensure that no air is incorporated.

A drop of glycerine/dessert product is put onto a slide and covered with a cover glass. The layer thickness is about 200 µm; pressure on the cover glass must be avoided in order to prevent deformation of the gas bubbles.

The sample is examined with a stereomicroscope (10x magnification) connected to a digital camera (JVC KY-F 55 BE), which in turn is connected to a computer with image analysis software originating from Leica (Leica Q Win Standard V 2.3). Before the start of the measurement the system is calibrated using a slide with divisions.

The sample is then put under the microscope and the number and diameter of the gas bubbles are measured.

The means given in the table are determined from these data.

## Claims

1. Gas containing dessert product which comprises a mixture of a dairy product and a whipped foamable product **characterized in that**
the dairy product is a product comprising at least milk and a binding agent and has a pH in the range of 6,0-7,5 whereas the whipped foamable product comprises an edible fat and gas bubbles with a maximum gas bubble diameter of 25 µm are present in the dessert product; said gas bubble diameter being stable for at least 15 days.

2. Gas containing dessert product according to claim 1, **characterized in that** the edible fat is a vegetable fat.

3. Gas containing dessert product according to claim 1 or 2 **characterized in that that** the whipped foamable product is a whipped cream substitute product.

4. Gas containing dessert product according to any of the claims 1-3 **characterized in that** the dairy product has a pH in the range of 6,5-7,0.

5. Gas-containing dessert product according to one or more of claims 1-4,
**characterized**
**in that** the dessert product is a pourable product.

6. Gas-containing dessert product according to one or more of claims 1-5,
**characterized**
**in that** the dairy product is custard.

7. Gas-containing dessert product according to claim 6,
**characterized in that** the whipped foamable product is a whipped cream substitute product containing a vegetable fat.

8. Method for preparation of a gas-containing dessert product, comprising
- provision of a dairy product comprising at least milk and a binding agent
- provision of a foamable product
- whipping of the foamable product to a desired overrun
- mixing of the whipped foamable product and the dairy product
**characterized**
**in that** the dairy product has a pH in the range of 6,0 - 7,5 , that the foamable product contains an edible fat and that the whipping of the foamable product takes place in such a way that a maximum gas bubble diameter of 25 µm is obtained with an overrun of > 200%, and the mixing of the dairy product and the whipped foamable product takes place in such quantities that an overrun of 10 to 150% is obtained in the gas-containing dessert product.

9. Method according to claim 8,
**characterized**
**in that** the overrun of the foamable product is >250% and the mixing of the whipped foamable product and the dairy product takes place in such a way that the overrun of the gas-containing dessert product is >40%.

10. Method according to claims 8-9,
**characterized**
**in that** a first buffer is formed from the dairy product and a second buffer from the whipped foamable product and that the mixing of the dairy product and the whipped foamable product takes place continuously.

## Patentansprüche

1. Gas enthaltendes Dessert, umfassend ein Gemisch aus einem Molkereiprodukt und einem geschlagenen aufschäumbaren Produkt, **dadurch gekennzeichnet, daß** das Molkereiprodukt ein Produkt ist, das zumindest Milch und ein Bindemittel umfaßt und einen pH im Bereich von 6,0 bis 7,5 aufweist, wohingegen das geschlagene aufschäumbare Produkt ein eßbares Fett umfaßt, und Gasblasen mit einem maximalen Gasblasendurchmesser von 25 µm in dem Dessert vorhanden sind, wobei der Gasblasendurchmesser für zumindest 15 Tage stabil ist.

2. Gas enthaltendes Dessert nach Anspruch 1, **dadurch gekennzeichnet, daß** das eßbare Fett ein pflanzliches Fett ist.

3. Gas enthaltendes Dessert nach Anspruch 1 oder 2, **dadurch gekennzeichnet, daß** das geschlagene aufschäumbare Produkt Schlagsahneersatz ist.

4. Gas enthaltendes Dessert nach einem der Ansprüche 1 bis 3, **dadurch gekennzeichnet, daß** das Molkereiprodukt einen pH im Bereich von 6,5 bis 7,0 aufweist.

5. Gas enthaltendes Dessert nach einem oder mehreren der Ansprüche 1 bis 4, **dadurch gekennzeichnet, daß** das Dessert ein gießbares Produkt ist.

6. Gas enthaltendes Dessert nach einem oder mehreren der Ansprüche 1 bis 5, **dadurch gekennzeichnet, daß** das Molkereiprodukt Vanillepudding ist.

7. Gas enthaltendes Dessert nach Anspruch 6, **dadurch gekennzeichnet, daß** das geschlagene aufschäumbare Produkt ein Schlagsahneersatz ist, der ein pflanzliches Fett enthält.

8. Verfahren zur Herstellung eines Gas enthaltenden Desserts, umfassend:
- Bereitstellung eines Molkereiproduktes, umfassend zumindest Milch und ein Bindemittel;
- Bereitstellung eines aufschäumbaren Produktes;
- Schlagen des aufschäumbaren Produktes bis zu einem gewünschten Aufschlag;
- Mischen des geschlagenen aufschäumbaren Produktes und des Molkereiproduktes, **dadurch gekennzeichnet, daß** das Molkereiprodukt einen pH im Bereich von 6,0 bis 7,5 aufweist, daß das aufschäumbare Produkt ein eßbares Fett enthält, und daß das Schlagen des aufschäumbaren Produktes so stattfindet, daß ein maximaler Gasblasendurchmesser von 25 µm mit einem Aufschlag von > 200 % erhalten wird, und das Mischen des Molkereiproduktes und des geschlagenen aufschäumbaren Produktes in solchen Mengen stattfindet, daß ein Aufschlag von 10 bis 150 % in dem Gas enthaltenden Dessert erhalten wird.

9. Verfahren nach Anspruch 8, **dadurch gekennzeichnet, daß** der Aufschlag des aufschäumbaren Produktes > 250 % beträgt und das Mischen des geschlagenen aufschäumbaren Produktes und des Molkereiproduktes so stattfmdet, daß der Aufschlag des Gas enthaltenden Desserts > 40 % beträgt.

10. Verfahren nach den Ansprüchen 8 bis 9, **dadurch gekennzeichnet, daß** ein erster Puffer aus dem Molkereiprodukt und ein zweiter Puffer aus dem geschlagenen aufschäumbaren Produkt gebildet werden, und daß das Mischen des Molkereiproduktes und des geschlagenen aufschäumbaren Produktes kontinuierlich stattfindet.

## Revendications

1. Produit pour dessert contenant du gaz, qui comprend un mélange d'un produit laitier et d'un produit fouetté capable de former une mousse, **caractérisé en ce que** le produit laitier est un produit contenant au moins du lait et un liant et il a un pH dans l'intervalle 6,0-7,5, que le produit fouetté capable de former une mousse comprend une graisse alimentaire et des bulles de gaz, le diamètre maximum des bulles de gaz présentes dans le produit pour dessert étant de 25 µm, ledit diamètre des bulles étant stable pendant au moins 15 jours.

2. Produit pour dessert contenant du gaz selon la revendication 1, **caractérisé en ce que** la graisse alimentaire est une graisse végétale.

3. Produit pour dessert contenant du gaz selon l'une des revendications 1 ou 2, **caractérisé en ce que** le produit fouetté capable de former une mousse est un substitut de crème fouettée.

4. Produit pour dessert contenant du gaz selon l'une quelconque des revendications 1 à 3, **caractérisé en ce que** le produit laitier a un pH dans l'intervalle 6,5-7,0.

5. Produit pour dessert contenant du gaz selon une ou plusieurs des revendications 1 à 4, **caractérisé en ce que** le produit pour dessert peut être versé.

6. Produit pour dessert contenant du gaz selon l'une ou plusieurs des revendications 1 à 5, **caractérisé en ce que** le produit laitier est une crème anglaise.

7. Produit pour dessert contenant du gaz selon la revendication 6, **caractérisé en ce que** le produit fouetté qui peut former une mousse est un substitut de crème fouettée contenant une graisse végétale.

8. Procédé pour la préparation d'un produit pour dessert contenant du gaz, comprenant les étapes consistant à :
- choisir un produit laitier comprenant au moins du lait et un liant,
- choisir un produit capable de former une mousse,
- fouetter le produit capable de former une mousse jusqu'au degré de foisonnement souhaité,
- mélanger le produit fouetté capable de former une mousse et le produit laitier,
**caractérisé en ce que** le produit laitier a un pH dans l'intervalle 6,0-7,5, le produit capable de former une mousse contient une graisse alimentaire, et le fouettage du produit capable de former une mousse est effectué de telle sorte qu'un diamètre de bulles maximum de 25 µm est obtenu avec un foisonnement supérieur à 200%, et le mélange du produit laitier et du produit fouetté capable de former une mousse est effectué en quantités telles qu'un foisonnement de 10 à 150% est obtenu dans le produit pour dessert contenant du gaz.

9. Procédé selon la revendication 8, **caractérisé en ce que** le foisonnement du produit capable de former une mousse est supérieur à 250% et **en ce que** le mélange du produit fouetté capable de former une mousse et du produit laitier est effectué de telle sorte que le foisonnement du produit pour dessert contenant du gaz est supérieur à 40%.

10. Procédé selon les revendications 8 - 9, **caractérisé en ce qu'**un premier lot est formé à partir du produit laitier et un second lot est formé à partir du produit fouetté capable de former une mousse, et **en ce que** le mélange du produit laitier et du produit fouetté capable de former une mousse est effectué en continu.
